(19) Europäisches Patentamt
European Patent Office
Office européen des brevets

(11) **EP 1 193 461 B1**

(12) **EUROPÄISCHE PATENTSCHRIFT**

(45) Veröffentlichungstag und Bekanntmachung des Hinweises auf die Patenterteilung:
**04.12.2013 Patentblatt 2013/49**

(51) Int Cl.:
*G01F 1/32* (2006.01)  *G01F 15/00* (2006.01)
*F15D 1/02* (2006.01)

(21) Anmeldenummer: **01121596.9**

(22) Anmeldetag: **11.09.2001**

(54) **Verfahren und Vorrichtung zum Vermindern von Resonanzerscheinungen**

Method and apparatus for reduction of resonance phenomena

Procédé et dispositif de reduction des phénomènes de résonance

(84) Benannte Vertragsstaaten:
**AT BE CH CY DE DK ES FI FR GB GR IE IT LI LU MC NL PT SE TR**

(30) Priorität: **27.09.2000 DE 10047826**

(43) Veröffentlichungstag der Anmeldung:
**03.04.2002 Patentblatt 2002/14**

(73) Patentinhaber: **Elster GmbH**
**55252 Mainz-Kastel (DE)**

(72) Erfinder: **Lötz-Dauer, Volker**
**65207 Wiesbaden (DE)**

(74) Vertreter: **Harlacher, Mechthild**
**Patentanwältin**
**Kupferdreherstrasse 282**
**45257 Essen (DE)**

(56) Entgegenhaltungen:
**US-A- 3 804 210  US-A- 4 986 134**

**Beschreibung**

Die Erfindung betrifft ein Verfahren zum Vermindern von Resonanzerscheinungen, die stromab eines Abrissbereichs eines von einem Medium umströmten Körpers durch wirbelablösung verursacht werden, wobei die Abströmrichtung in Bezug auf die Geometrie des umströmten Körpers in einem bestimmten Winkelbereich festliegt und wobei an dem Abrissbereich mindestens eine Karmansche Wirbelstraße erzeugt wird.

Derartige Resonanzerscheinungen können, abhängig von verschiedenen Randbedingungen, zu erheblichen technischen Problemen führen. So können sich hinter dem Abrissbereich des umströmten Körpers Bauteile oder Hohlräume befinden, die auf die Resonanzerscheinungen ansprechen. Dies gilt vor allem für Rohrströmungen und geschlossene Systeme, wie Armaturen, Mess- und Regelgeräte, Strömungsmaschinen etc. Als Folge können sich Funktionsfehler ergeben. Auch kann es zu erhöhtem Verschleiß oder gar zu zerstörungen kommen.

Die US-A-4 986 134 offenbart ein Verfahren zur Vermeidung von strömungsbedingten Schwingungskräften an zylindrischen Körpern, wie Schornsteinen oder Kabeln, welche von einem Medium, insbesondere Luft oder Wasser üblicherweise mit frei wechselnden Anströmrichtungen umströmt werden. An mindestens einem Teilabschnitt des Körpers wird der Durchmesser etwa verdoppelt. An den verschieden dicken Abschnitten des Körpers sollen sich kompensierende Kräfte erzeugt werden. Die störende bzw. schädliche Wirkung von Wirbeln im Medium und somit auf die Umwelt aufgrund von Resonanzerscheinungen (Lärmentwicklung, Beeinflussung des Messverhaltens von Strömungsmessgeräten innerhalb von Rohrströmungen, Resonanzanregung umgebender Bauteile, ect.) wird nicht erwähnt.Die Wirbel lösen sich, unabhängig vom Durchmesser der Teilzylinder, auf Achshöhe ab, also an derselben Stelle in Strömungsrichtung gesehen , da die Zylinder konzentrisch sind.

Der Erfindung liegt die Aufgabe zugrunde, die Resonanzerscheinungen im Medium zu vermindern.

Zur Lösung dieser Aufgabe ist das eingangs genannte Verfahren erfindungsgemäß dadurch gekennzeichnet, dass der Abrissbereich des Körpers über seiner Länge (L) in eine Mehrzahl von Abschnitten unterteilt ist und dass benachbarte Abschnitte in Abströmrichtung gegeneinander versetzt sind, derart dass benachbarte Karmansche Wirbelstraßen gegeneinander phasenverschoben sind.

Die Phasenverschiebung führt zu einer starken Dissipation der Wirbel untereinander und ist folglich geeignet, die Intensität der durch Wirbelablösung induzierten Effekte mindestens erheblich zu verringern. Hierdurch lässt sich die Kopplung der Frequenzerregung und des schwingungsfähigen Systemteils wirksam unterbinden.

Die Phasenverschiebung führt zu einer Superposition zweier frequenz- und amplitudengleicher Sinusschwingungen. Beste Ergebnisse werden dann erzielt, wenn die Phasenverschiebung benachbarter Karmanscher Wirbelstraßen etwa 180° beträgt. Je stärker die Phasenverschiebung gegen 0° bzw. gegen 360° geht, desto geringer wird die Dissipation der Wirbel untereinander. Wird mit mehr als zwei Karmanschen Wirbelstraßen gearbeitet, so können die Phasenverschiebungen benachbarter Wirbelstraßen durchaus auch unterschiedlich sein.

Die Erfindung ist überall dort anwendbar, wo der umströmte Körper einen abströmseitigen Abrissbereich bildet. Es ist eine naheliegende Maßnahme, den Körper spitz auslaufen zu lassen. Eine derartige Ausbildung ist aber aus konstruktiven und fertigungstechnischen Gründen nur begrenzt nutzbar und reicht häufig nicht aus.

Die Erfindung ist anwendbar auf Rohrströmungen sowie auf geschlossene Systeme, Apparate und Armaturen. Sie entfaltet ihre Vorteile ferner auch in einer Freifeldströmung, allerdings unter der Voraussetzung, dass die Anströmrichtung in Bezug auf die Geometrie des umströmten Körpers in einem bestimmten Winkelbereich festliegt. Dies ist zum Beispiel der Fall, wenn die Anströmung durch eine Eigenbewegung des Körpers in einem quasi ruhenden Medium entsteht, was beispielsweise bei Fahrzeugen der Fall ist.

Häufig lassen sich die Resonanzerscheinungen dem verursachenden umströmten Körper direkt zuordnen. Die Anwendung der Erfindung ist dann ohne Zwischenschritt möglich. Entstehen die Resonanzerscheinungen hingegen an einer komplexen Struktur, beispielsweise an einer Strömungsmaschine oder an einem Fahrzeug, so muss der die Resonanzerscheinungen auslösende Körper erst ermittelt werden, bevor die Erfindung zur Anwendung gebracht werden kann.

vorzugsweise beträgt die Versetzung benachbarter Abschnitte des Abrissbereichs in Abströmrichtung etwa eine halbe Wellenlänge. Daraus resultiert eine Phasenverschiebung benachbarter Karmanscher Wirbelstraßen von etwa 180°.

Die Wellenlänge λ bestimmt sich aus der Formel

$$\lambda = \frac{w}{f} \qquad\qquad (1)$$

Dabei bedeutet w die Strömungsgeschwindigkeit des Mediums und f die Frequenz der Karmanschen Wirbelstraße.

Für die Frequenz gilt die Formel

$$f = \frac{Sr \cdot w}{d.} \qquad (2)$$

Dabei bedeutet d die charakteristische Abmessung des Körpers, im Falle einer Platte also deren Dicke. Sr steht für die Strouhal-Zahl. Diese hängt ab von der Form des umströmten Körpers und von der Reynolds-Zahl. In vielen Anwendungsfällen kann die Abhängigkeit der Strouhal-Zahl von der Reynolds-Zahl jedoch vernachlässigt werden. Die Reynolds-Zahl wird dann also dem jeweiligen umströmten Körper als Konstante zugeordnet. Die Strouhal-Zahl ist körperspezifisch und wird experimentell ermittelt.

Durch Einsetzen der Formel (2) in die Formel (1) ergibt sich die Wellenlänge zu

$$\lambda = \frac{d}{Sr.} \qquad (3)$$

In wesentlicher Weiterbildung der Erfindung wird vorgeschlagen, dass die Erstreckung der gegeneinander versetzten Abschnitte des Abrissbereichs in dessen Richtung eine halbe Wellenlänge bis zwei Wellenlängen der Frequenz der Karmanschen wirbelstraßen beträgt. Es wurde gefunden, dass sich in diesem Bereich eine hohe Effektivität bei der Verminderung der Resonanzerscheinungen erzielen lässt. Mit zunehmender Vergrößerung der Erstreckung lässt diese Effektivität nach.

Die zahl der gegeneinander versetzten Abschnitte hängt also von deren Erstreckung und von der Gesamt- Erstreckung des Abrissbereichs ab. Dabei ist es vorteilhaft, die zahl der gegeneinander versetzten Abschnitte des Abrissbereichs bis zu einer Anzahl von zehn Abschnitten geradzahlig zu wählen, da sich dadurch eine ausgeglichene Aufteilung der Energie auf links- und rechtsdrehende Wirbel ergibt. Bei mehr als zehn Abschnitten bewirkt die hohe Anzahl der Abschnitte den erwünschten Ausgleich.

Die Erfindung wird im folgenden anhand bevorzugter Ausführungsbeispiele im Zusammenhang mit der beiliegenden Zeichnung näher erläutert. Die Zeichnung zeigt in:

Figur 1 in schematischer Darstellung ein erstes Ausführungsbeispiel;
Figur 2 einen Axialschnitt durch ein zweites Ausführungsbeispiel.

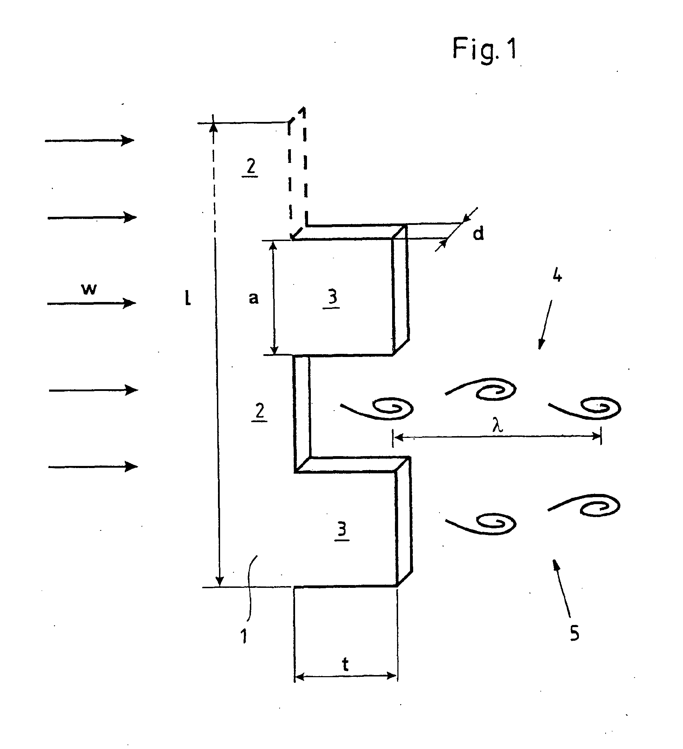

Figur 1 zeigt als einfachsten Anwendungsfall eine ebene Platte 1, die mit der Strömungsgeschwindigkeit w längsseitig angeströmt wird. Ihr abströmseitiger Abrißbereich besitzt eine Länge L. Die Dicke der Platte bildet deren charakteristische Abmessung d.

Der Abrißbereich der Platte 1 ist in benachbarte Abschnitte 2 und 3 unterteilt, die in Abströmrichtung gegeneinander versetzt sind, und zwar um die Strecke t, die eine halbe Wellenlänge beträgt. Die in Längsrichtung gemessene Erstreckung a der Abschnitte 2 und 3 beträgt etwas mehr als eine halbe Wellenlänge.

An den Abschnitten 2 und 3 entstehen Karmansche Wirbelstraßen 4 bzw. 5, die um eine halbe Wellenlänge λ gegeneinander versetzt sind. Dies führt zu einer starken Dissipation der Wirbel untereinander, die die auf die Strömungsablösung zurückzuführenden Resonanzerscheinungen vermindert.

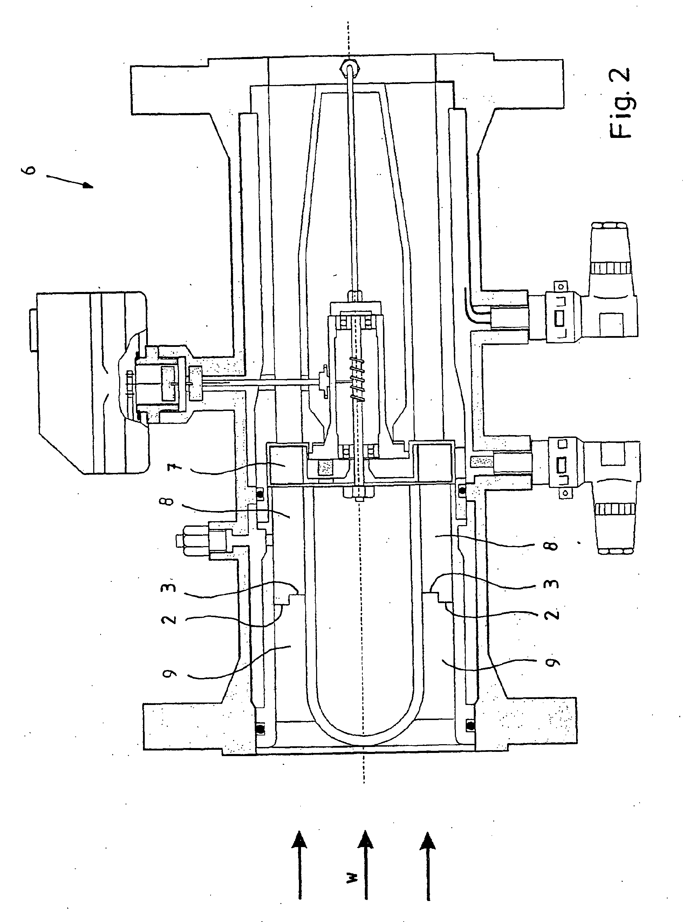

Figur 2 zeigt einen Gaszähler 6 mit einem Turbinenrad 7, in dessen Einlaufkanal 8 eine Mehrzahl von Leitrippen 9 angeordnet ist. Jede Leitrippe 9 weist in ihrem Abrißbereich zwei benachbarte Abschnitte 2 und 3 auf, die in Abströmrichtung gegeneinander versetzt sind.

Wenn die Strouhal-Zahl der Leitrippen 9 z.B. Sr = 0,2 beträgt, und die Rippendicke d = 2 mm, ergibt sich eine Wellenlänge λ = 10 mm. Die Versetzung beträgt also t = 5 mm. Da die Erstreckung des Abrißbereichs, bezogen auf die Wellenlänge, klein ist, wird hier mit zwei gegeneinander versetzten Abschnitten gearbeitet.

Da die Reynolds-Zahl unberücksichtigt geblieben ist, kann sich für die Strouhal-Zahl eine Abweichung von z.B. 10 % ergeben. Damit weicht auch die Versetzung t um 10 % von der tatsächlichen halben Wellenlänge ab. Die resultierende Phasenverschiebung liefert aber immer noch ca. 95 % der Auslöschung. Das System ist also überraschenderweise weitgehend unempfindlich gegenüber Abweichungen.

Im Rahmen der Erfindung sind durchaus Abwandlungsmöglichkeiten gegeben. So können die gegeneinander versetzten Abschnitte um unterschiedliche Längen gegeneinander versetzt sein und auch in Richtung des Abrißbereichs unterschiedliche Erstreckungen aufweisen. Im Falle eines geneigt zur Strömungsrichtung verlaufenden Abrißbereichs können die gegeneinander versetzten Abschnitte auch eine stufenförmige Konfiguration bilden.

# EP 1 193 461 B1

**Patentansprüche**

1. Verfahren zum Vermindern von Resonanzerscheinungen, die stromab eines Abrissbereichs eines von einem Medium umströmten Körpers durch Wirbelablösung verursacht werden, wobei die Anströmrichtung in Bezug auf die Geometrie des umströmten Körpers in einem bestimmten Winkelbereich festliegt und wobei an dem Abrissbereich mindestens eine Karmansche Wirbelstraße erzeugt wird,
**dadurch gekennzeichnet,**
**dass** der Abrissbereich des Körpers über seiner Länge (L) in eine Mehrzahl von Abschnitten (2, 3) unterteilt ist und dass benachbarte Abschnitte (2, 3) in Abströmrichtung gegeneinander versetzt sind, derart, dass benachbarte Karmansche Wirbelstraßen gegeneinander phasenverschoben sind.

2. Verfahren nach Anspruch 1,
**dadurch gekennzeichnet,**
**dass** die Phasenverschiebung benachbarter Karmanscher wirbelstraßen etwa 180° beträgt.

3. Verfahren nach Anspruch 1 oder 2,
**dadurch gekennzeichnet,**
**dass** die Erstreckung (a) der gegeneinander versetzten Abschnitte (2, 3) des Abrissbereichs in dessen Richtung eine halbe Wellenlänge ($\lambda$/2) bis zwei Wellenlängen (2 $\lambda$) der Karmanschen Wirbelstraßen beträgt.

4. Verfahren nach einem der Ansprüche 1 bis 3, **dadurch gekennzeichnet, dass** die Zahl der gegeneinander versetzten Abschnitte (2, 3) des Abrissbereichs bis zu einer Anzahl von zehn Abschnitten geradzahlig ist.

**Claims**

1. Method for reducing resonance phenomena which are caused by vortex shedding downstream of a separation region of a body around which a medium flows, the incident flow direction being fixed in a specific angular range with reference to the geometry of the body which is flowed around, and at least one Karman vortex street being generated at the separation region, **characterized in that** the separation region of the body is subdivided over its length (L) into a plurality of sections (2, 3), and **in that** neighbouring sections (2, 3) are mutually offset in the outflow direction in such a way that neighbouring Karman vortex streets are phase shifted with respect to one another.

2. Method according to Claim 1,
**characterized in that** the phase shift of neighbouring Karman vortex streets is approximately 180°.

3. Method according to Claim 1 or 2,
**characterized in that** the extent (a) of the mutually offset sections (2, 3) of the separation region in the direction thereof is a half-wavelength ($\lambda$/2) to two wavelengths (2 $\lambda$) of the Karman vortex streets.

4. Method according to one of Claims 1 to 3, **characterized in that** the number of the mutually offset sections (2, 3) of the separation region is even-numbered up to a number of ten sections.

**Revendications**

1. Procédé de réduction des phénomènes de résonance provoqués par le détachement de tourbillons en aval d'une zone de séparation d'un corps autour duquel s'écoule un fluide, la direction d'afflux étant fixée dans une plage angulaire déterminée par rapport à la géométrie du corps autour duquel s'écoule un fluide, et au moins une allée de tourbillons de Karman étant générée au niveau de la zone de séparation,
**caractérisé en ce que**
la zone de séparation du corps est divisée sur sa longueur (L) en une pluralité de sections (2, 3) et **en ce que** des sections adjacentes (2, 3) sont décalées les unes par rapport aux autres dans la direction de sortie du flux, de telle sorte que des allées de tourbillons de Karman adjacentes soient déphasées les unes par rapport aux autres.

2. Procédé selon la revendication 1,
**caractérisé en ce que** le déphasage d'allées de tourbillons de Karman adjacentes vaut environ 180°.

**3.** Procédé selon la revendication 1 ou 2,
**caractérisé en ce que** l'étendue (a) des sections (2, 3) de la zone de séparation décalées les unes par rapport aux autres dans la direction de la zone de séparation vaut une demi-longueur d'onde ($\lambda/2$) à deux longueurs d'ondes ($2\lambda$) des allées de tourbillons de Karman.

**4.** Procédé selon l'une quelconque des revendications 1 à 3,
**caractérisé en ce que** le nombre des sections (2, 3) de la zone de séparation décalées les unes par rapport aux autres jusqu'à un nombre de dix sections est un nombre pair.

Fig. 1

w

l

a

2

3

2

3

d

4

λ

5

1

t

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4986134 A